# EUROPEAN PATENT SPECIFICATION

(11) **EP 3 279 228 B1**
(45) Date of publication and mention of the grant of the patent: **17.07.2019**
(21) Application number: 16772011.9
(22) Date of filing: 26.02.2016
(51) Int. Cl.: C09D 11/106, C08F 236/04, C08F 210/14, C09D 11/037, C08F 246/00

(54) **RESIN FOR OFFSET PRINTING INK**
HARZ FÜR OFFSET-DRUCKTINTE
RÉSINE POUR ENCRE D'IMPRESSION OFFSET

(30) Priority: 30.03.2015 JP 2015069241
(43) Date of publication of application: 07.02.2018
(73) Proprietor: Harima Chemicals, Inc., Kakogawa-shi, Hyogo 675-0019 (JP)
(72) Inventor: OKAWACHI, Keijiro, Kakogawa-shi Hyogo 675-0019 (JP); SASAKURA, Keiji, Kakogawa-shi Hyogo 675-0019 (JP); HISADA, Hiroyuki, Kakogawa-shi Hyogo 675-0019 (JP); MATSUSHIMA, Hironori, Kakogawa-shi Hyogo 675-0019 (JP)
(74) Representative: Hoffmann Eitle
(86) International application number: PCT/JP2016/055823
(87) International publication number: WO 2016/158127

(56) References cited:
- EP-A1- 1 533 351
- EP-A2- 0 877 066
- WO-A1-2008/062918
- WO-A1-2008/133370
- JP-A- 2002 338 848
- SHU HASHIMOTO ET AL.: 'Urushi Oyobi Cashew no Toryo Seibun ni Kansuru Kenkyu' JOURNAL OF JAPAN COATING TECHNOLOGY ASSOCIATION vol. 16, no. 9, 1981, pages 338 - 344, XP009506432

## Description

### TECHNICAL FIELD

An embodiment of the present invention relates to a resin for an offset printing ink, which produces high solubility when being formed into a varnish, and is capable of imparting excellent glossiness, drying properties, and misting resistance to an offset printing ink.

### BACKGROUND ART

A dicyclopentadiene-type petroleum resin has conventionally suitably been used as a resin for an offset printing ink because of good wettability with a pigment, such as carbon black. However, the petroleum resin has the problem of extremely low solubility with respect to a solvent for ink, such as aliphatic hydrocarbon.

Recently, it is strongly desired to prevent deterioration of working environment due to scattering of printing inks with increasing speed of offset printing machines. As an improvement plan, for example, a method for improving elasticity of ink by enhancing the molecular weight of a resin for an offset printing ink has been known. However, increasing the molecular weight of the dicyclopentadiene-type petroleum resin causes further deterioration of the solubility with respect to the solvent for ink. In order to ensure the solubility with respect to the solvent for ink, a resin for ink has been proposed which is obtainable by reacting a resin material composed of dicyclopentadiene, nonylphenol, tall oil, and fumaric acid (for example, Patent Document 1).

The resin for ink as described above is already subjected to long-chain alkyl modification, and therefore has high solubility with respect to the solvent for ink when being formed into a varnish. However, the resin described in Patent Document 1 is not capable of imparting, to the ink, misting resistance and drying properties corresponding to the recently increased speed of printing machines. There is also a desire to further improve glossiness of offset printing inks.

### PRIOR ART DOCUMENT

### PATENT DOCUMENT

Patent Document 1: Specification of U.S. Patent. No. 5587007

### SUMMARY OF THE INVENTION

### PROBLEMS TO BE SOLVED BY THE INVENTION

An embodiment of the present invention aims at providing a resin for an offset printing ink, which produces high solubility when being formed into a varnish, and is capable of imparting excellent glossiness, drying properties, and misting resistance to an offset printing ink.

### MEANS FOR SOLVING THE PROBLEMS

A resin for an offset printing ink according to an embodiment of the present invention contains a resin whose monomer unit is a monomer ingredient containing (A) phenols having an unsaturated hydrocarbon group having carbon atoms of 10 to 20 which is located at least at a meta position, and (B) cyclopentadienes.

A method for manufacturing a resin for an offset printing ink according to an embodiment of the present invention includes reacting, in the presence of a Bronsted acid catalyst, a monomer ingredient containing at least (A) phenols having an unsaturated hydrocarbon group having carbon atoms of 10 to 20 which is located at least at a meta position, and (B) cyclopentadienes.

A varnish for an offset printing ink according to an embodiment of the present invention contains the above resin for the offset printing ink, and a drying oil or semi-drying oil.

An offset printing ink according to an embodiment of the present invention contains the above varnish for the offset printing ink, and a pigment.

### EFFECTS OF THE INVETION

With the resin for the offset printing ink according to the embodiment of the present invention, it is possible to produce high solubility when being formed into a varnish, and impart excellent glossiness, drying properties, and misting resistance to the offset printing ink.

### PREFERRED EMBODIMENTS FOR CARRYING OUT THE INVENTION

A resin for an offset printing ink according to an embodiment of the present invention contains a resin whose monomer unit is a monomer ingredient containing the following ingredients (A) and ingredients (B). The resin for the offset printing ink according to the embodiment of the present invention is described in detail below.
Ingredients (A): phenols having an unsaturated hydrocarbon group having carbon atoms of 10 to 20 which is located at least at a meta position
Ingredients (B): cyclopentadienes

### <Monomer Ingredients>

### (Ingredients (A): specific phenols)

The ingredients (A) for use in the resin for the offset printing ink according to the embodiment of the present invention are specifically phenols represented by the following formula (I). The ingredients (A) have an aromatic ring and are therefore capable of imparting excellent glossiness to the offset printing ink. 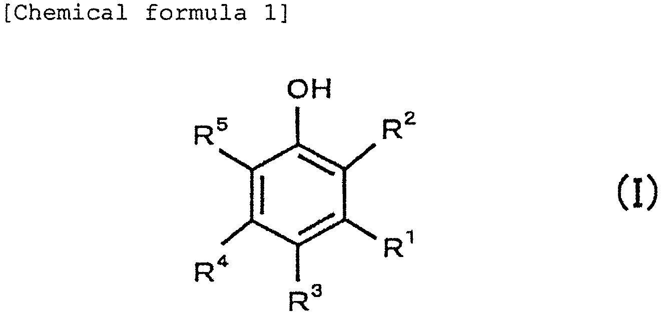 In the formula (I), R¹ shows an unsaturated hydrocarbon group having carbon atoms of 10 to 20, and R² to R⁵ independently show hydrogen atom, hydroxyl group, and saturated or unsaturated hydrocarbon group (also including R¹) having carbon atoms of 1 to 20.

R¹ is not particularly limited insofar as being unsaturated hydrocarbon group having carbon atoms of 10 to 20, and may have a straight chain structure or branched structure. When the carbon atoms are less than 10, lipophilicity derived from the hydrocarbon group becomes poor and hence has low solubility with respect to a solvent used when preparing a varnish and an ink. When the carbon atoms exceed 20, the resin has a low softening point, and the ink has poor setting and drying properties. R¹ is preferably a straight chain unsaturated hydrocarbon group having carbon atoms of 12 to 16. The number of unsaturated bonds contained in the unsaturated hydrocarbon group is not particularly limited, but it is necessary to contain at least one unsaturated bond, and preferably approximately 1 to 4 unsaturated bonds.

Examples of the ingredients (A) include cardanol and urushiol. As shown in the following formula (II), cardanol is the generic name for compounds in which R¹ is an unsaturated hydrocarbon group having carbon atoms of 15 and 1 to 3 double bonds (C=C), and R² to R⁵ are respectively a hydrogen atom in the formula (I). Urushiol is the generic name for compounds in which R¹ is an unsaturated hydrocarbon group having carbon atoms of 15 and 1 to 3 double bonds (C=C), R² is a hydroxyl group (-OH), and R³ to R⁵ are respectively a hydrogen atom in the formula (I).

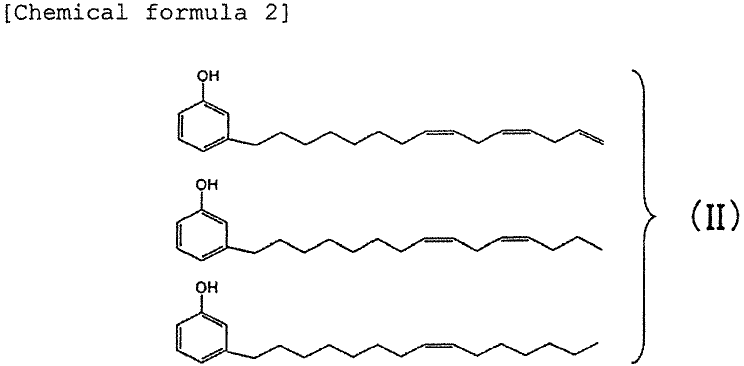

Cardanol is an ingredient extracted from plants in the family Anacardiaceae, such as cashew, lacquer tree, and mango. In particular, high-purity cardanol is contained in cashew shell oil obtainable by heating and refining an oily liquid contained in shells of cashew nuts, and is inexpensively available. As shown in the above formula (II), cardanol is usually used in a state of a mixture of compounds in which an unsaturated hydrocarbon group corresponding to R¹ in the formula (I) has 1 to 3 double bonds. Alternatively, cardanol may be used by being isolated into an individual compound. Still alternatively, the cashew shell oil may be directly used as a raw material.

Urushiol is also an ingredient extracted from plants in the family Anacardiaceae, such as lacquer tree, cashew, and mango. In particular, high-purity urushiol is contained in the sap of lacquer tree. Urushiol is a mixture of compounds in which an unsaturated hydrocarbon group corresponding to R¹ in the formula (I) has 1 to 3 double bonds, and is usually used in a state of the mixture. Alternatively, urushiol may be used by being isolated into an individual compound. Still alternatively, the sap of lacquer tree may be directly used as a raw material.

The ingredients (A) are preferably contained in an amount of 3 to 60% by mass, more preferably 5 to 50% by mass, and still more preferably 20 to 40% by mass in a monomer ingredient. When the ingredients (A) are contained in the above amount, it is possible to impart more excellent misting resistance and drying properties to a printing ink. The ingredients (A) may be used alone or in combination of two or more kinds. From the viewpoint of reducing manufacturing costs of the resin, the ingredients (A) are preferably cardanol or urushiol, and more preferably cardanol.

### (Ingredients (B): Cyclopentadienes)

The ingredient (B) for use in the resin for the offset printing ink according to the embodiment of the present invention are not particularly limited insofar as being cyclopentadienes. Examples of cyclopentadienes include cyclopentadiene, alkyl derivatives of cyclopentadiene, cyclopentadiene multimer, alkyl derivatives of cyclopentadiene multimer, and codimer of cyclopentadiene and another monomer. As the alkyl derivatives of cyclopentadiene, there are, for example, ones in which the carbon atoms of an alkyl portion is 1 to 5, specifically, methylcyclopentadiene, dimethylcyclopentadiene, ethylcyclopentadiene, and pentamethylcyclopentadiene. As the cyclopentadiene multimer, there are, for example, dimer, trimer, and tetramer, specifically, dicyclopentadiene, tricyclopentadiene, and tetradicyclopentadiene. As described above, the multimers, such as the dimer, trimer, and tetramer of cyclopentadiene, and the codimer of cyclopentadiene and another monomer, are also included in "the cyclopentadienes." Therefore, these multimers are handled for convenience as a monomer ingredient in the present specification.

When the cyclopentadiene is used as the ingredient (B), dicyclopentadiene is preferably used. This is because cyclopentadiene is an unstable compound and is gradually dimerized into dicyclopentadiene at room temperature (refer to the following formula (III)). Dicyclopentadiene is thermally decomposed into cyclopentadiene (refer to the following formula (III)). Therefore, when dicyclopentadiene is used, at least part thereof decomposes during reaction, thereby allowing cyclopentadiene to react with the ingredient (A).

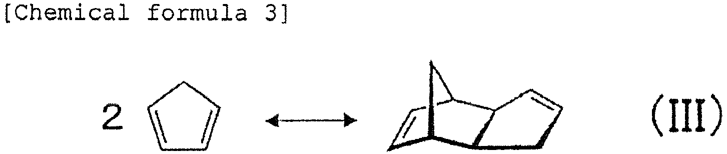

Although the ingredients (B) may be used alone, it is preferable to use two or more kinds together. A combined use of two or more kinds further improves the effect of imparting solubility when being formed into a varnish, and the effect of imparting glossiness to the offset printing ink. On the combined use of two or more kinds, a mixture of the ingredients (B) contain a main ingredient in an amount of approximately 70 to 90% by mass, and preferably approximately 73 to 85% by mass. For example, in a mixture of the ingredient (B) containing dicyclopentadiene as a principal ingredient, the mixture contains, for example, approximately 70 to 90% by mass, preferably approximately 73 to 85% by mass of dicyclopentadiene, and a codimer of cyclopentadiene as a residue. For example, the content of the codimer of cyclopentadiene is approximately 3 to 30% by mass, preferably approximately 7 to 25% by mass, and more preferably approximately 10 to 20% by mass. As described above, the codimer of cyclopentadiene is the codimer of cyclopentadiene and another monomer, and a compound obtainable by bonding between 1 mol of cyclopentadiene and 1 mol of another monomer. Examples of the another monomer include metylcyclopentadiene, butadiene, isoprene, and 1,3-pentadiene.

The ingredients (B) are preferably contained in an amount of 40 to 97% by mass, more preferably 30 to 90% by mass, and still more preferably 40 to 80% by mass in a monomer ingredient. The ingredients (B) being contained in the above amount contribute to further improving the solubility when being formed into a varnish, thereby making it possible to impart more excellent glossiness to the offset printing ink.

### (Other Polymerizable Unsaturated Compounds)

Any polymerizable unsaturated compound other than the ingredients (A) and (B) may be contained in the monomer ingredient insofar as it does not inhibit the effects of the resin for the offset printing ink according to the embodiment of the present invention. Examples of the polymerizable unsaturated compound include alkyl (meth) acrylate, hydroxy group-containing monomer, α,β-unsaturated carboxylic acid, aliphatic unsaturated hydrocarbon monomer, alicyclic unsaturated hydrocarbon monomer, aromatic hydrocarbon monomer, rosins, unsaturated fatty acid, and oil and fat containing unsaturated fatty acid. The polymerizable unsaturated compounds may be used alone, or two or more kinds thereof may be used together. Here, "(meth)acryl" means "acryl" or "methacryl." When using a polymerizable unsaturated compound, preferably 5 to 40% by mass, and more preferably approximately 10 to 30% by mass of the polymerizable unsaturated compound is contained in the monomer ingredient.

Examples of alkyl (meth) acrylate include (meth)acrylate monomers of a straight, branched, or cyclic alkyl having a carbon atoms of 1 to 35, such as methyl (meth)acrylate, ethyl (meth)acrylate, n-propyl (meth)acrylate, isopropyl (meth)acrylate, n-butyl (meth)acrylate, isobutyl (meth)acrylate, s-butyl (meth)acrylate, t-butyl (meh)acrylate, pentyl (meth)acrylate, neopentyl (meth)acrylate, isoamyl(meth)acrylate, hexyl (meth)acrylate, heptyl (meth)acrylate, octyl (meth)acrylate, isooctyl (meth)acrylate, 2-etylhexyl (meth)acrylate, nonyl (meth)acrylate, isononyl (meth)acrylate, decyl (meth)acrylate, dodecyl (meth)acrylate, tridecyl (meth)acrylate, tetradecyl (meth)acrylate, 1-methyltridecyl (meth)acrylate, hexadecyl (meth)acrylate, octadecyl (meth)acrylate (stearyl (meth)acrylate), isostearyl (meth)acrylate, eicosyl (meth)acrylate, docosyl (meth)acrylate (behenyl (meth)acrylate), tetracocyl (meth)acrylate, triacontyl (meth)acrylate, and cyclohexyl (meth)acrylate; and saturated alicyclic group containing monomers having a saturated alicyclic group composed of two or more rings.

As a saturated alicyclic group-containing monomer which contains a saturated alicyclic group composed of two or more rings, there are, for example, (meth)acrylate containing bicyclo group, (meth)acrylate containing tricyclo group, and (meth)acrylate containing tetracyclo group. As the (meth)acrylate containing bicyclo group, there are, for example, include bornyl (meth)acrylate, isobornyl (meth)acrylate, and dicyclopentanyl (meth)acrylate. As the (meth)acrylate containing tricyclo group, there are, for example, adamantyl (meth)acrylate and dimethyl adamantyl(meth)acrylate.

Examples of hydroxy group-containing monomer include 2-hydroxyethyl (meth)acrylate, 4-hydroxybutyl (meth)acrylate, 2-hydroxypropyl (meth)acrylate, caprolactone modified (meth)acrylate, and polyethylene glycol acrylate.

Examples of the α,β-unsaturated carboxylic acid include chain α,β-unsaturated monocarboxylic acids having 3 to 5 carbon atoms, chain α,β-unsaturated dicarboxylic acids having 3 to 5 carbon atoms or anhydride thereof, and aromatic α,β-unsaturated carboxylic acid. Specific examples thereof include acrylic acid, methacrylic acid, maleic acid, maleic acid anhydride, fumaric acid, itaconic acid, itaconic acid anhydride, crotonic acid, and cinnamic acid.

Examples of aliphatic unsaturated hydrocarbon monomer include: olefins, such as ethylene, propylene, 1-n-butene, dipropylene, diisobutylene, tripropylene, tributylene, 1-hexene, 1-octen, 1-decene, 1-dodecene, 1-tetradecene, 1-hexadecene, 1-octadecene, 1-eicosene, 1-docosene, 1-tetracosene, 1-hexacosene, 1-octacosene, 1-triacontane, 1-dotoriacontane, 1- tetratriacontane, 1-hexatriacontane, 1-octatriacontane, and 1-tetracontane; and unsaturated polyolefins such as butadiene, isoprene, and 1,3-pentadiene.

Examples of the alicyclic unsaturated hydrocarbon monomer include: monocyclic bodies, such as cyclopentene, cyclohexene, allylcyclopentane, vinylcyclohexane, limonene, terpinolene, α-terpinene, and γ-terpinene; bycyclic bodies, such as norbornene, norbornadiene, α-pinene, and β-pinene; tetracyclic bodies, such as tetracyclododecene, or alkyl substitution product, alkenyl substitution product, alkylidene substitution product, and aryl substitution product of these polycyclic bodies. Examples of the aromatic hydrocarbon monomer include as styrene, indene, vinyl toluene, and α-methyl styrene.

Examples of the rosin include gum rosin, tall oil rosin, and wood rosin. Examples of the derivatives of rosin, for example, polymerized rosin, acrylated rosin, hydrogenated rosin, and a disproportionated rosin.

Examples of the unsaturated fatty acid include α-linolenic acid, linoleic acid, oleic acid, tung oil fatty acid, tall oil fatty acid, linseed oil fatty acid, safflower oil fatty acid, soybean oil fatty acid, dehydrated castor oil fatty acid, and fish oil fatty acid. Examples of the fats and oils containing unsaturated fatty acids include animal fats and oils, and vegetable oils and fats. Examples of the animal fats and oils include beef tallow, lard, and fish oil. Examples of the vegetable oils and fats include soybean oil, dehydrated castor oil, linseed oil, tung oil, palm oil, castor oil, palm oil, and rapeseed oil. Alternatively, recycled oil may be used which is obtainable by recovering and recycling an oil used for food, such as a frying oil. As a recycling method, there are generally removal of a precipitate by filtration, decolorization, and the like.

Examples of other polymerizable unsaturated compounds include vinyl cyanide monomers such as (meth) acrylonitrile, itaconate such as benzyl itaconate, maleate such as dimethyl maleate, fumarate such as dimethyl fumarate, and vinyl acetate.

### <Resin for Offset Printing Ink>

The resin for the offset printing ink according to the embodiment of the present invention is obtainable by reacting the monomer ingredients described above. A reaction method is not particularly limited, and may be carried out under conditions under which the polymerization reaction can proceed. For example, the monomer ingredients may be reacted under a pressure of 0.2 to 1 MPa at 150 to 300°C for approximately 2 to 6 hours, and then reacted under the atmospheric pressure at 200 to 300°C for 2 to 12 hours. The reactions are carried out, for example, in an autoclave.

When reacting the monomer ingredients described above, a reaction catalyst may be used. Examples of the reaction catalyst include Bronsted acid catalysts. By reacting the monomer ingredients with the use of the reaction catalyst, the resin for the offset printing ink according to the embodiment of the present invention is capable of imparting more excellent glossiness to the offset printing ink. Examples of the Bronsted acid catalysts include p-toluenesulfonic acid, methanesulfonic acid, sulfophthalic acid, sulfuric acid, phosphoric acid, hypophosphorous acid, and hydrochloric acid. Of these Bronsted acid catalysts, p-toluenesulfonic acid is preferred.

The reaction catalyst is preferably added in an amount of 0.01 to 1 part by mass, and more preferably in an amount of 0.1 to 0.5 parts by mass relative to 100 parts by mass of a monomer ingredient. The reaction catalyst may be added prior to the reaction, or may be added in the middle of the reaction. From the viewpoint of improving reaction efficiency, the reaction catalyst is preferably added in the middle of the reaction.

Since the ingredients (A) and the ingredients (B) have a plurality of unsaturated bonds in molecules, the ingredients (A) and the ingredients (B) have a plurality of reaction points. Therefore, different reactions seem to be proceeding instead that only a certain reaction proceeds specifically.

The resin for the offset printing ink according to the embodiment of the present invention preferably has a weight average molecular weight of 2000 to 300000, more preferably 10000 to 200000, and still more preferably 30000 to 60000. When the weight average molecular weight is within the above range, the resin for the offset printing ink according to the embodiment of the present invention is capable of producing more excellent solubility and imparting more excellent glossiness to the offset printing ink. Moreover, the resin for the offset printing ink according to the embodiment of the present invention preferably has a softening point of 120-200°C, and more preferably 150 to 180°C.

The resin for the offset printing ink according to the embodiment of the present invention may contain, besides the resin obtained by the reaction of the forgoing monomer ingredients, another resin insofar as it does not inhibit the effects of the resin for the offset printing ink according to the embodiment of the present invention. Examples of the another resin include petroleum resin, rosin-modified phenolic resins, and alkyd resin.

### <Varnish for Offset Printing Ink>

Next, a description is given of a varnish for an offset printing ink which uses the resin for the offset printing ink according to the embodiment of the present invention. The varnish for the offset printing ink preferably contains a drying oil or semi-drying oil and preferably further contains a solvent, in addition to the resin for the offset printing ink described above.

Examples of the drying oil or semi-drying oil include linseed oil, tung oil, soybean oil, and refined soybean oil. Examples of the solvent include aliphatic hydrocarbon solvents. When preparing the varnish, various kinds of gelling agents may be added taking viscoelasticity into consideration, insofar as they do not inhibit the effects of the varnish for the offset printing ink according to the embodiment of the present invention. No particular limitation is imposed on the gelling agents, and examples thereof include: aluminum compounds such as aluminum alcoholate, and aluminum soap; metal soaps such as manganese type, cobalt type, and zirconium type; and alkanol amine. These gelling agents may be used alone or in combination of two or more kinds.

A method for preparing the varnish is not particularly limited. For example, the resin for the offset printing ink and a drying oil or semi-drying oil (a solvent and a gelling agent as needed) are mixed together, followed by stirring until the resin and the drying oil or semi-drying oil are mixed sufficiently. It is usually necessary to stir for approximately 1 to 3 hours at 150 to 200°C.

Offset printing is applicable to different printing objects (printing papers) having different sizes, thicknesses, and paper qualities, such as newsprint, postcards, poster papers, and business cards. Therefore, the content of each of ingredients, such as a resin, contained in the varnish for an offset printing ink is not particularly limited. The content of each of ingredients is suitably settable depending on a printing paper and the kind and nature of a resin used therefor.

### <Offset Printing Ink>

An offset printing ink using the resin for the offset printing ink according to the embodiment of the present invention is described below. The offset printing ink contains a varnish containing the above resin for the offset printing ink, and a pigment. That is, the offset printing ink is prepared by dispersing a desired color pigment (black pigment, blue pigment, red pigment, etc.) into the varnish for the offset printing ink. A solvent used when preparing the varnish may be added to control a tack value of the ink. The content of each of the pigment and varnish contained in the offset printing ink is not particularly limited. The content of each of the pigment and varnish is suitably settable depending on the type and nature of the printing paper as described above.

The resin for the offset printing ink according to the embodiment of the present invention produces high solubility when being formed into a varnish, and is therefore easily formable into the varnish. That is, the resin for the offset printing ink described above is sufficiently dissolved in the varnish for the offset printing ink according to the embodiment of the present invention. Furthermore, the offset printing ink according to the embodiment of the present invention contains the varnish for the offset printing ink, and consequently has excellent glossiness, drying properties, and misting resistance.

### EXAMPLES

The embodiment of the present invention is specifically described below with reference to Examples and Comparative Examples, but it should be construed that the present invention is in no way limited to Examples. "DCPD (1)" and "DCPD (2)" used in Examples and Comparative Examples are as follows. The composition of each of the "DCPD (1)" and "DCPD (2)" was analyzed by gas chromatography. The analytical conditions are as follows.
DCPD (1): dicyclopentadiene (manufactured by Dow Chemical Co., Ltd., in which dicyclopentadiene has a purity of 82% by mass, and the residue is a codimer of cyclopentadiene and another monomer).
DCPD (2): dicyclopentadiene (manufactured by Dow Chemical Co., Ltd., in which dicyclopentadiene has a purity of 95% by mass, and the residue is a codimer of cyclopentadiene and another monomer).

### <Analytical Conditions of Gas Chromatography>

Device: "GC-14A" and "chromatographic pack CR-4A" manufactured by Shimadzu Corporation
Column: capillary column "DB-1" manufactured by J & W Scientific Inc. (length of 30 m, inner diameter of 0.25mm, liquid phase film thickness of 0.25 pm)
Temperature: Column 40°C × 5 minutes up to 250°C (10°C/ min), 60°C at an inlet, 250°C at a detector (FID)

### (Example 1)

5% by mass of cardanol (manufactured by Shanghai Meidong Biomaterials Corp.) and 95% by mass of DCPD (1) as cyclopentadienes were loaded and sealed in an autoclave, and this was subjected to a temperature rise up to 260°C over approximately 3 hours. After the temperature rise, this was stirred for approximately 4 hours while maintaining the temperature. The pressure inside the autoclave gradually lowered from approximately 0.5 MPa, and was finally approximately 0.2 MPa. Then, the pressure inside the autoclave was released until reaching atmospheric pressure. Subsequently, p-toluenesulfonic acid was added in amount of 0.1 parts by mass as a reaction catalyst relative to 100 parts by mass of a monomer ingredient. After the addition, this was retained for approximately 3 hours to obtain a resin 1. The resultant resin 1 had a weight average molecular weight of approximately 12000 and a softening point of 163°C. Measurement conditions for the weight average molecular weight are as follows. The softening point was measured according to JIS K5601-2-2.

### <Weight Average Molecular Weight (GPC measurement conditions)>

Measuring device: "shodex GPC-101" manufactured by SHOWA DENKO K.K.
Column: "KF-802" + "KF-806L" × 2, manufactured by SHOWA DENKO K.K.
Detector: "shodex RI-71" (differential refractive index detector)
Data processing: "480IIXP"
Column temperature: 40°C
Solvent: tetrahydrofuran
Flow rate: 1.0 mL/min
Sample concentration: approximately 0.5% by mass of tetrahydrofuran solution (100 µm)
Used standard polystyrenes
"S-0.5" manufactured by SHOWA DENKO K.K.
"S-1.0" manufactured by SHOWA DENKO K.K.
"S-1.2" manufactured by SHOWA DENKO K.K.
"S-1.9" manufactured by SHOWA DENKO K.K.
"S-2.9" manufactured by SHOWA DENKO K.K.
"S-3.1" manufactured by SHOWA DENKO K.K.
"S-4.4" manufactured by SHOWA DENKO K.K.
"S-5.1" manufactured by SHOWA DENKO K.K.
"S-7.2" manufactured by SHOWA DENKO K.K.
"S-19.6" manufactured by SHOWA DENKO K.K.
"S-49.2" manufactured by SHOWA DENKO K.K.
"S-114" manufactured by SHOWA DENKO K.K.
"S-257" manufactured by SHOWA DENKO K.K.
"S-778" manufactured by SHOWA DENKO K.K.
"S-1320" manufactured by SHOWA DENKO K.K.
"S-7450" manufactured by SHOWA DENKO K.K.

### (Example 2)

A resin 2 was obtained in the same procedure as Example 1 except for changes into 10% by mass of cardanol and 90% by mass of DCPD (1). The weight average molecular weight and softening point of the resultant resin 2 were measured in the same manner as in Example 1. The resultant resin 2 had a weight average molecular weight of approximately 17000 and a softening point of 165°C.

### (Example 3)

A resin 3 was obtained in the same procedure as Example 1 except for changes into 20% by mass of cardanol and 80% by mass of DCPD (1). The weight average molecular weight and softening point of the resultant resin 3 were measured in the same manner as in Example 1. The resultant resin 3 had a weight average molecular weight of approximately 30000 and a softening point of 167°C.

### (Example 4)

A resin 4 was obtained in the same procedure as Example 1 except for changes into 30% by mass of cardanol and 70% by mass of DCPD (1). The weight average molecular weight and softening point of the resultant resin 4 were measured in the same manner as in Example 1. The resultant resin 4 had a weight average molecular weight of approximately 35000 and a softening point of 160°C.

### (Example 5)

A resin 5 was obtained in the same procedure as Example 4 except that the pressure inside the autoclave was released until reaching atmospheric pressure, followed by retention for 8 hours. The weight average molecular weight and softening point of the resultant resin 5 were measured in the same manner as in Example 1. The resultant resin 5 had a weight average molecular weight of approximately 82000 and a softening point of 175°C.

### (Example 6)

A resin 6 was obtained in the same procedure as Example 4 except that the pressure inside the autoclave was released until reaching atmospheric pressure, followed by retention for 7 hours. The weight average molecular weight and softening point of the resultant resin 6 were measured in the same manner as in Example 1. The resultant resin 6 had a weight average molecular weight of approximately 50000 and a softening point of 170°C.

### (Example 7)

A resin 7 was obtained in the same procedure as Example 1 except for changes into 40% by mass of cardanol and 60% by mass of DCPD (1), and except that the pressure inside the autoclave was released until reaching atmospheric pressure, followed by retention for 8 hours. The weight average molecular weight and softening point of the resultant resin 7 were measured in the same manner as in Example 1. The resultant resin 7 had a weight average molecular weight of approximately 75000 and a softening point of 170°C.

### (Example 8)

A resin 8 was obtained in the same procedure as Example 7 except for replacing DCPD (1) with DCPD (2). The weight average molecular weight and softening point of the resultant resin 8 were measured in the same manner as in Example 1. The resultant resin 8 had a weight average molecular weight of approximately 73000 and a softening point of 176°C.

### (Example 9)

A resin 9 was obtained in the same procedure as Example 1 except for changes into 60% by mass of cardanol and 40% by mass of DCPD (1), and except that the pressure inside the autoclave was released until reaching atmospheric pressure, followed by retention for 10 hours. The weight average molecular weight and softening point of the resultant resin 9 were measured in the same manner as in Example 1. The resultant resin 9 had a weight average molecular weight of approximately 140000 and a softening point of 155°C.

### (Example 10)

30% by mass of cardanol (manufactured by Shanghai Meidong Biomaterials Corp.) and 70% by mass of DCPD (1) as cyclopentadienes were loaded and sealed in an autoclave, and this was subjected to a temperature rise up to 260°C over approximately 3 hours. After the temperature rise, this was stirred for approximately 5 hours while maintaining the temperature. The pressure inside the autoclave gradually lowered from approximately 0.5 MPa, and was finally approximately 0.2 MPa. Then, the pressure inside the autoclave was released until reaching atmospheric pressure. This was further retained for approximately 5 hours to obtain a resin 10. The resultant resin 10 had a weight average molecular weight of approximately 53000 and a softening point of 168°C.

### (Comparative Example 1)

A comparative resin 1 was obtained in the same procedure as Example 1 except for using only 100% by mass of DCPD (1) without using cardanol, and except that the pressure inside the autoclave was released until reaching atmospheric pressure, followed by retention for 3 hours. The weight average molecular weight and softening point of the comparative resin 1 were measured in the same manner as in Example 1. The comparative resin 1 had a weight average molecular weight of approximately 16000, and a softening point thereof was unmeasurable because of exceeding 200°C.

### (Comparative Example 2)

A comparative resin 2 was obtained in the same procedure as Comparative Example 1 except that the pressure inside the autoclave was released until reaching atmospheric pressure, followed by retention for 1 hour. The weight average molecular weight and softening point of the comparative resin 2 were measured in the same manner as in Example 1. The comparative resin 2 had a weight average molecular weight of approximately 2000 and a softening point of 130°C.

### (Comparative Example 3)

A comparative resin 3 was obtained in the same procedure as Example 3 except for replacing cardanol with tall oil fatty acid ("Hartall FA-1", manufactured by Harima Chemicals Group, Inc.). The weight average molecular weight and softening point of the comparative resin 3 were measured in the same manner as in Example 1. The comparative resin 3 had a weight average molecular weight of approximately 25000 and a softening point of 145°C.

### (Comparative Example 4)

A comparative resin 4 was obtained in the same procedure as Example 3 except for replacing cardanol with nonylphenol. The weight average molecular weight and softening point of the comparative resin 4 were measured in the same manner as in Example 1. The comparative resin 4 had a weight average molecular weight of approximately 14000 and a softening point of 150°C.

### (Comparative Example 5)

15% by mass of nonylphenol, 75% by mass of DCPD (1), 14% by mass of distilled tall oil ("Hartall SR30", manufactured by Harima Chemicals Group, Inc.), and 1% by mass of fumaric acid were loaded and sealed in an autoclave, and this was subjected to a temperature rise up to 260°C over approximately 3 hours. The "Hartall SR30" contains fatty acid in an amount of approximately 57% by mass and rosin acid in an amount of approximately 41% by mass. After the temperature rise, this was stirred for approximately 4 hours while maintaining the temperature. Then, the pressure inside the autoclave was released until reaching atmospheric pressure. This was further retained for approximately 14 hours to obtain a comparative resin 5. The comparative resin 5 had a weight average molecular weight of approximately 30000 and a softening point of 163°C.

To evaluate printability of the resultant resins 1 to 10 and the comparative resins 1 to 5, a varnish for an offset printing ink was prepared, and an offset printing ink was obtained using the obtained varnish.

### <Preparation of Varnish>

As presented in Table 1, each of the resins obtained in Examples 1 to 10 and Comparative Examples 1 to 5 (the resins 1 to 10 and the comparative resins 1 to 5), refined soybean oil, and AF7 (aroma-free solvent manufactured by JX Nippon Oil & Energy Corporation) were loaded into a flask in the proportions presented in Table 1. This was stirred at 190°C for 1 hour to prepare a varnish for an offset printing ink. The case where the resin dissolved into the solvent when being formed into the varnish was evaluated as being "++", the case where the resin dissolved in the solvent even though being somewhat time consuming was evaluated as being "+", and the case where the resin did not dissolve and could not be formed into a varnish was evaluated as being "-". The results are presented in Table 1. The resin obtained in Comparative Example 1 (the comparative resin 1) had low solubility with respect to the solvent and could not be formed into a varnish, and therefore the evaluation of printability thereof was not carried out.

### <Preparation of Ink>

As present in Table 1, each of the resultant varnish and a neutral carbon black ("RCF#52" manufactured by Mitsubishi Chemical Corporation) were mixed in their respective amounts presented in Table 1. Subsequently, the neutral carbon black was dispersed in the varnish by using a three roll mill ("S-4 3/4×11" manufacturing by Inoue Mfg., Inc.). Subsequently, AF7 was added in an amount presented in Table 1 and controlled so that a tack at 25°C was approximately 7.0-8.0, thereby obtaining an offset printing ink.

### <Evaluation of Printability>

Each of the resultant offset printing inks was evaluated in terms of (1) glossiness, (2) setting and drying properties, and (3) misting resistance by the following methods. The results are presented in Table 1.

### (1) Glossiness

0.2 mL of the offset printing ink was applied onto a coated paper ("Pearl Coat" manufactured by Mitsubishi Paper Mills Co., Ltd.) by a two split roll of an RI tester ("RI-2" manufactured by Ishikawajima Industrial Machinery Co., Ltd.) . Glossiness of the ink after 24 hours elapsed from the application was measured by a 60°-60° gloss meter ("micro-tri-gross" manufactured by Taiyukizai Co., Ltd.). The case where the measured value was 50 or more was evaluated as having glossiness.

### (2) Setting and Drying Properties

Similarly to the measurement of the glossiness, 0.2 mL of the offset printing ink was applied onto a coated paper by the two split roll of the RI tester. A tip of a nozzle of a heat gun ("Pla-jet PJ-208A" manufactured by Ishizaki Denki Seisakusho Co., Ltd.) was attached to a position located 30 cm away from an application sample. Hot air was applied to the application sample, and tackiness was checked by touching an applied surface with a finger. The time until the finger did not feel tackiness was measured. A five-grade evaluation was conducted according to the following criteria. The evaluation of the "grade 3" or higher is usually determined as being a usable level.
"Grade 5": excellent setting and drying properties in 2 minutes;
"Grade 4": good setting and drying properties in 3 minutes;
"Grade 3": general setting and drying properties in 5 minutes;
"Grade 2": slow setting and drying properties in 7 minutes;
"Grade 1": remarkably slow setting and drying properties in 7 minutes or more

### (3) Misting Resistance

360 mL of the offset printing ink was put on an inkometer (manufactured by TOYO SEIKI Co. Ltd.) and rotated at 2000 rpm for 2 minutes. Scattered states of the ink onto white papers respectively put on front and lower surfaces of a roll were visually observed and evaluated on the following five grade scale. The case having the level "grade 3" or higher was evaluated as having excellent misting resistance.
"Grade 5": no scattering (excellent misting resistance)
"Grade 4": being slightly scattered (good misting resistance)
"Grade 3": being usable even though being scattered
"Grade 2": being scattered much
"Grade 1": being scattered remarkably

**[Table 1]**

| | | Examples | | | | | | | | | | Comparative Examples | | | | |
|---|---|---|---|---|---|---|---|---|---|---|---|---|---|---|---|---|
| | | 1 | 2 | 3 | 4 | 5 | 6 | 7 | 8 | 9 | 10 | 1 | 2 | 3 | 4 | 5 |
| Resin | Cardanol (% by mass) | 5 | 10 | 20 | 30 | 30 | 30 | 40 | 40 | 60 | 30 | - | - | - | - | - |
| | DCPD(1) (% by mass) | 95 | 90 | 80 | 70 | 70 | 70 | 60 | - | 40 | 70 | 100 | 100 | 80 | 80 | 70 |
| | DCPD(2) (% by mass) | - | - | - | - | - | - | - | 60 | - | - | - | - | - | - | - |
| | Tall oil fatty acid (% by mass) | - | - | - | - | - | - | - | - | - | - | - | - | 20 | - | - |
| | Nonylphenol (% by mass) | - | - | - | - | - | - | - | - | - | - | - | - | - | 20 | 15 |
| | Distilled tall oil (% by mass) | - | - | - | - | - | - | - | - | - | - | - | - | - | - | 14 |
| | Fumaric acid (% by mass) | - | - | - | - | - | - | - | - | - | - | - | - | - | - | 1 |
| | Para-toluenesolfonic acid (parts by mass) | 0.1 | 0.1 | 0.1 | 0.1 | 0.1 | 0.1 | 0.2 | 0.2 | 0.3 | - | 0.1 | 0.1 | - | 0.1 | - |
| | Softening point (°C) | 163 | 165 | 167 | 160 | 175 | 170 | 170 | 176 | 155 | 168 | >200 | 130 | 145 | 150 | 163 |
| | Mw (× 10000) | -1.2 | 1.7 | 3.0 | 3.5 | 8. 2 | 5.0 | 7.5 | 7.3 | 14.0 | 5.3 | 1.6 | 0.2 | 2.5 | 1.4 | 3.0 |
| Varnish | Resin (% by mass) | 50 | 49 | 46 | 42 | 42 | 42 | 43 | 43 | 42 | 44 | 53 | 58 | 46 | 48 | 44 |
| | Refined soybean oil (% by mass) | 12 | 12 | 12 | 12 | 12 | 12 | 12 | 12 | 12 | 12 | 12 | 12 | 12 | 12 | 12 |
| | AF7 (% by mass) | 38 | 39 | 42 | 46 | 46 | 46 | 45 | 45 | 46 | 44 | 35 | 30 | 42 | 40 | 44 |
| | Solubility | + | ++ | ++ | ++ | + | ++ | ++ | + | ++ | ++ | - | ++ | + | ++ | ++ |
| Ink | Varnish (% by mass) | 75 | 73 | 70 | 70 | 70 | 70 | 69 | 68 | 66 | 68 | - | 70 | 71 | 70 | 68 |
| | AF7 (% by mass) | 5 | 7 | 10 | 10 | 10 | 10 | 11 | 12 | 14 | 12 | - | 10 | 9 | 10 | 12 |
| | Carbon black(% by mass) | 20 | 20 | 20 | 20 | 20 | 20 | 20 | 20 | 20 | 20 | - | 20 | 20 | 20 | 20 |
| | Glossiness | 58 | 64 | 70 | 73 | 68 | 75 | 72 | 60 | 62 | 65 | - | 58 | 48 | 60 | 46 |
| | Setting and drying properties | 3 | 3 | 3 | 3 | 5 | 5 | 4 | 5 | 3 | 5 | - | 1 | 1 | 2 | 2 |
| | Misting resistance | 3 | 4 | 5 | 5 | 5 | 5 | 5 | 5 | 5 | 5 | - | 1 | 2 | 1 | 2 |

| | | | | | | | | | | | | | | | | |
|---|---|---|---|---|---|---|---|---|---|---|---|---|---|---|---|---|
| Para-toluenesulfonic acid refers to the content (parts by mass) relative to 100 parts by mass of a monomer ingredient. | | | | | | | | | | | | | | | | |

Table 1 shows that the resins 1 to 10 respectively obtained in Examples 1 to 10 have high solubility when being formed into a varnish. Table 1 also shows that the offset printing inks respectively using the resins 1 to 10 have excellent glossiness, drying properties, and misting resistance.

In contrast, the comparative resin 1 obtained in Comparative Example 1 had low solubility with respect to the solvent when being formed into a varnish, and was therefore unusable as a resin for an offset printing ink. Although the printability of the comparative resins 2 to 5 (Comparative Examples 2 to 5) which were capable of being formed into a varnish was evaluated by controlling the ink, these comparative examples failed to satisfy all of glossiness, drying properties, and misting resistance.

## Claims

1. A resin for an offset printing ink, comprising a resin whose monomer unit is a monomer ingredient comprising
(A) phenols having an unsaturated hydrocarbon group having carbon atoms of 10 to 20 which is located at least at a meta position, and
(B) cyclopentadienes.

2. The resin for the offset printing ink according to claim 1, wherein the ingredient (A) is contained in an amount of 3 to 60% by mass in the monomer ingredient.

3. The resin for the offset printing ink according to claim 1 or 2, wherein the ingredient (A) is cardanol.

4. The resin for the offset printing ink according to any one of claims 1 to 3, wherein the ingredient (B) is a mixture containing at least two kinds of cyclopentadienes.

5. The resin for the offset printing ink according to claim 4, wherein the mixture contains a codimer of cyclopentadiene, and dicyclopendadiene.

6. The resin for the offset printing ink according to claim 5, wherein the codimer of cyclopentadiene is contained in an amount of 3 to 30% by mass in the mixture.

7. The resin for the offset printing ink according to claim 5 or 6,
wherein the codimer of cyclopentadiene is a compound obtainable by bonding between 1 mol of cyclopentadiene and 1 mol of another monomer; and
wherein the another monomer is a monomer selected from the group consisting of metylcyclopentadiene, butadiene, isoprene, and 1,3-pentadiene.

8. The resin for the offset printing ink according to any one of claims 1 to 7, having a weight average molecular weight of 2000 to 300000.

9. A method for manufacturing a resin for an offset printing ink, comprising:
reacting, in a presence of a Bronsted acid catalyst, a monomer ingredient comprising (A) phenols having an unsaturated hydrocarbon group having carbon atoms of 10 to 20 which is located at least at a meta position, and (B) cyclopentadienes.

10. A varnish for an offset printing ink, comprising a resin for an offset printing ink according to any one of claims 1 to 8, and a drying oil or semi-drying oil.

11. The varnish for an offset printing ink according to claim 10, further comprising a solvent.

12. An offset printing ink comprising a varnish for an offset printing ink according to claim 10 or 11, and a pigment.

## Patentansprüche

1. Harz für eine Offset-Drucktinte, das ein Harz umfasst, dessen Monomereinheit ein Monomerbestandteil ist, umfassend
(A) Phenole mit einer ungesättigten Kohlenwasserstoffgruppe mit 10 bis 20 Kohlenstoffatomen, die mindestens in einer meta-Position angeordnet ist, und
(B) Cyclopentadiene.

2. Harz für eine Offset-Drucktinte gemäß Anspruch 1, wobei der Bestandteil (A) in einer Menge von 3 bis 60 Massen-% in dem Monomerbestandteil enthalten ist.

3. Harz für eine Offset-Drucktinte gemäß Anspruch 1 oder 2, wobei der Bestandteil (A) Cardanol ist.

4. Harz für eine Offset-Drucktinte gemäß mindestens einem der Ansprüche 1 bis 3, wobei der Bestandteil (B) eine Mischung ist, die mindestens zwei Arten von Cyclopentadienen enthält.

5. Harz für eine Offset-Drucktinte gemäß Anspruch 4, wobei die Mischung ein Codimer aus Cyclopentadien und Dicyclopentadien enthält.

6. Harz für eine Offset-Drucktinte gemäß Anspruch 5, wobei das Codimer aus Cyclopentadien in einer Menge von 3 bis 30 Massen-% in der Mischung enthalten ist.

7. Harz für eine Offset-Drucktinte gemäß Anspruch 5 oder 6,
wobei das Codimer aus Cyclopentadien eine Verbindung ist, die durch Verbinden von 1 Mol Cyclopentadien und 1 Mol eines anderen Monomers erhältlich ist; und
wobei das andere Monomer ein Monomer, ausgewählt aus der Gruppe bestehend aus Methylcyclopentadien, Butadien, Isopren und 1,3-Pentadien, ist.

8. Harz für eine Offset-Drucktinte gemäß mindestens einem der Ansprüche 1 bis 7, welches ein gewichtsmittleres Molekulargewicht von 2000 bis 300000 aufweist.

9. Verfahren zur Herstellung eines Harzes für eine Offset-Drucktinte, umfassend:
ein Monomerbestandteil, der (A) Phenole mit einer ungesättigten Kohlenwasserstoffgruppe mit 10 bis 20 Kohlenstoffatomen, die mindestens in einer meta-Position angeordnet ist, und (B) Cyclopentadiene umfasst, wird in Gegenwart eines Brönsted-Säurekatalysators umgesetzt.

10. Lack für eine Offset-Drucktinte, der das Harz für eine Offset-Drucktinte gemäß mindestens einem der Ansprüche 1 bis 8 und ein trocknendes Öl oder halb-trocknendes Öl umfasst.

11. Lack für eine Offset-Drucktinte gemäß Anspruch 10, der ferner ein Lösungsmittel umfasst.

12. Offset-Drucktinte, die den Lack für eine Offset-Drucktinte gemäß Anspruch 10 oder 11 und ein Pigment umfasst.

## Revendications

1. Résine pour une encre d'impression offset, comprenant une résine dont l'unité monomère est un ingrédient monomère comprenant
(A) des phénols ayant un groupe hydrocarbure insaturé ayant de 10 à 20 atomes de carbone qui se trouve au moins au niveau d'une position méta, et
(B) des cyclopentadiènes.

2. Résine pour l'encre d'impression offset selon la revendication 1, dans laquelle l'ingrédient (A) est contenu en une quantité de 3 à 60% en masse dans l'ingrédient monomère.

3. Résine pour l'encre d'impression offset selon la revendication 1 ou 2, dans laquelle l'ingrédient (A) est le cardanol.

4. Résine pour l'encre d'impression offset selon l'une quelconque des revendications 1 à 3, dans laquelle l'ingrédient (B) est un mélange contenant au moins deux sortes de cyclopentadiènes.

5. Résine pour l'encre d'impression offset selon la revendication 4, dans laquelle le mélange contient un codimère de cyclopentadiène, et du dicyclopentadiène.

6. Résine pour l'encre d'impression offset selon la revendication 5, dans laquelle le codimère de cyclopentadiène est contenu en une quantité de 3 à 30 % en masse dans le mélange.

7. Résine pour l'encre d'impression offset selon la revendication 5 ou 6,
dans laquelle le codimère de cyclopentadiène est un composé pouvant être obtenu par liaison entre 1 mole de cyclopentadiène et 1 mole d'un autre monomère ; et
dans laquelle l'autre monomère est un monomère sélectionné à partir du groupe constitué par le méthylcyclopentadiène, le butadiène, l'isoprène, et le 1,3-pentadiène.

8. Résine pour l'encre d'impression offset selon l'une quelconque des revendications 1 à 7, ayant une masse moléculaire moyenne en poids de 2 000 à 300 000.

9. Procédé de fabrication d'une résine pour une encre d'impression offset, comprenant :
la mise en réaction, en présence d'un catalyseur acide de Brønsted, d'un ingrédient monomère comprenant (A) des phénols ayant un groupe hydrocarbure insaturé ayant de 10 à 20 atomes de carbone qui se trouve au moins au niveau d'une position méta, et (B) des cyclopentadiènes.

10. Vernis pour une encre d'impression offset, comprenant une résine pour une encre d'impression offset selon l'une quelconque des revendications 1 à 8, et une huile siccative ou une huile semi-siccative.

11. Vernis pour une encre d'impression offset selon la revendication 10, comprenant en outre un solvant.

12. Encre d'impression offset comprenant un vernis pour une encre d'impression offset selon la revendication 10 ou 11, et un pigment.
